# EUROPÄISCHE PATENTSCHRIFT

(11) **EP 0 784 884 B1**
(45) Veröffentlichungstag und Bekanntmachung des Hinweises auf die Patenterteilung: **14.01.1998**
(21) Anmeldenummer: 95935901.9
(22) Anmeldetag: 05.10.1995
(51) Int. Cl.: H02P 7/638

(54) **ELEKTROWERKZEUG, INSBESONDERE SCHRAUBER**
ELECTRIC TOOL, IN PARTICULAR A SCREW-DRIVING TOOL
OUTIL ELECTRIQUE, NOTAMMENT UN OUTIL DE VISSAGE

(30) Priorität: 05.10.1994 DE 4435558; 07.02.1995 DE 19503956
(43) Veröffentlichungstag der Anmeldung: 23.07.1997
(73) Patentinhaber: Metabowerke GmbH & Co., D-72622 Nürtingen (DE)
(72) Erfinder: ROTTMERHUSEN, Hermann, D-25782 Tellingstedt (DE)
(74) Vertreter: Elbertzhagen, Otto
(86) Internationale Anmeldenummer: EP9503923
(87) Internationale Veröffentlichungsnummer: WO9611525

(56) Entgegenhaltungen:
- DE-A- 3 830 196
- DE-A- 4 130 532
- RADIO FERNSEHEN ELEKTRONIK, Bd. 33, Nr. 6, Juni 1984 BERLIN DE, Seiten 389-391, DIETMAR BERGHÄNEL 'Schwingungspaketsteuerung zur Leistungsregulierung elektrischer Maschinen'

## Beschreibung

### TECHNISCHES GEBIET

Die Erfindung bezieht sich auf ein Elektro- Schraubwerkzeug, der im Gattungsbegriff des Patentanspruchs 1 näher bezeichneten Art.

Bei solchen Elektrowerkzeugen, die überwiegend mit einem drehend betriebenen Werkzeug ausgestattet werden können, kann die Drehzahl variiert werden, wozu der elektrische Antriebsmotor mit einer Phasenanschnittsteuerung betrieben wird. Es handelt sich bei diesen Motoren um Wechselstrommotoren, nämlich Universalmotoren, die entsprechend an einem Wechselstromnetz angeschlossen werden können.

### STAND DER TECHNIK

Bei den bekannten Phasenanschnittsteuerungen wird jede Halbwelle der Wechselspannung entweder als Vollwelle oder als angeschnittene Welle genutzt, um einen möglichst gleichförmigen Betrieb mit einem stetigen Drehzahlverhalten zu erzielen.

Mit einer solchen Steuerung sind auch bekannte Elektroschraubwerkzeuge ausgestattet, hier führen jedoch stetige Drehzahlen beim Eindrehen von Bauschrauben oder dergleichen zu Auswurfkräften am Schraubwerkzeug, denen manuell entgegengewirkt werden muß, dennoch ist ein gleichmäßiges bündiges Eindrehen der Bauschrauben äußerst schwierig. Eine Anpassung an die jeweiligen Schraubbedingungen über eine Drehmomentenvorwahl kommt vor allem bei Befestigungen in Holzmaterialien oder an Holzkonstruktionen kaum in Betracht, da fast jeder Schraubvorgang ein anderes Drehmoment benötigt.

Es ist weiter bekannt, einen am Wechselstromnetz betriebenen Elektromotor mit Kurzschlußläufer für den Antrieb einer Kreissäge mit einer Austaststeuerung zu versehen, welche die Wechselspannung lückend an den Motor schaltet, DE 41 30 532 A1. Bei dieser bekannten Schaltungsanordnung geht es darum, unter bestimmten Betriebsbedingungen, wie im Leerlauf, die Aufnahmeleistung zu reduzieren, um dabei die dem Vollbetrieb entsprechende Drehzahl aufrechtzuerhalten. Andererseits kann auch eine Drehzahl- und Drehmomentenreduzierung vorgesehen werden, um im Teillastbetrieb die Aufnahmeleistung zu vermindern. Für im Handeinsatz verwendete Elektrowerkzeuge kommt unter dem Gesichtspunkt der Leistungsreduzierung eine solche Austaststeuerung nicht in Betracht, weil für einen stetigen Betrieb die Schwungmassen zu klein sind; außerdem kann ein Kurzschlußläufer-Induktionsmotor kein brauchbares Drehmoment bis hin zum Stillstand abgeben.

In der Fachliteratur wird bei Anwendung der Austaststeuerung, die auch als Impulspaketsteuerung oder Schwingungspaketsteuerung bezeichnet wird, im Zusammenspiel mit Elektromotoren empfohlen, die Drehzahl- oder Drehmomentenschwankungen durch eine zusätzlich Schwungmasse auszugleichen, vergleiche DE-Z "Der Elektromeister + Deutsches Elektrohandwerk", 1973, Bd. 48, H. 18, S. 1269, 1270. Danach versteht man unter einer Impulspaket- oder Schwingungspaket-Steuerung eine solche Schaltungsanordnung, bei der an den betreffenden Verbraucher, wie den Elektromotor, immer periodisch die volle Spannung und Frequenz angelegt und dazwischen der Verbraucher jeweils vom Netz getrennt wird. Es versteht sich, daß entsprechend der periodischen Ein- und Ausschaltvorgänge bei einem Elektromotor ein pulsendes Drehmoment erzielt wird, welches an sich unerwünscht ist. So setzt man bei Elektrowerkzeugen bislang die Phasenanschnittsteuerung ein, um unter Verwendung jeder Halbwelle der speisenden Wechselspannung ein möglichst gleichmäßiges Drehmomentenverhalten im Betrieb zu erzielen.

### DIE ERFINDUNG

Die Erfindung beruht auf dem Gedanken, den geschilderten Auswurfkräften beim Schraubvorgang entgegenzuwirken und ein gleichmäßiges bündiges Eindrehen von Bauschrauben oder dergleichen zu erleichtern. Hierzu ist es von Vorteil, wenn die wirksamen Schraubkräfte durch eine gepulstes Drehmoment aufgebracht werden, hier also im Takt stattfindende Impulse in Form von Verdrehungsverzögerungen bis hin zu Umdrehungsunterbrechungen erfolgen.

Für diese besonderen Einsatzfälle, wie sie vorstehend anhand eines Schraubvorganges erläutert wurden, ist es vorteilhaft, bei einem Elektro-Schraubwerkzeug mit einem wechselnden, an- und abschwellenden Drehmoment zu arbeiten. Hier setzt die Erfindung ein, und es liegt ihr die Aufgabe zugrunde, ein Elektro-Schraubwerkzeug zu schaffen, welches sowohl mit variabler, stetiger Drehzahl als auch mit variabler, ruckender Drehzahl und entsprechend pulsierendem Drehmoment betrieben werden kann.

Diese Aufgabe wird bei einem Elektro-Schraubwerkzeug der gattungsbildenden Art durch die Merkmale des Patentanspruchs 1 gelöst.

Für das erfindungsgemäße Elektro-Schraubwerkzeug ist wesentlich, daß einerseits durch die variable Phasenanschnittsteuerung die Drehzahl und das Drehmoment in üblicher Weise einstellbar bleibt, andererseits jedoch durch die variable wellenpaketgesteuerte Phasenanschnittsteuerung, also durch die Wellenpaketsteuerung in Verbindung mit der Phasenanschnittsteuerung, schwellende Schraubkräfte aufgebracht werden können, die durch im Takt stattfindende Impulse in Form von Umdrehungsverzögerungen bis hin zum Beharrungspunkt und der wiederansteigenden Drehzahlen bedingt sind. Hierdurch wird den auftretenden Fliehkräften, die beim Schrauben mit gleichbleibenden Drehzahlen eine Auswurftendenz des Schraubwerkzeugs nach sich ziehen, entgegengewirkt. Somit setzt sich das Schraubwerkzeug im Betrieb mit der Wellenpaketsteuerung infolge der Umdrehungsunterbrechungen bzw. Umdrehungsverzögerungen jeweils wieder zum erneuten Kraftfluß in die Antriebsvertiefungen des Schraubenkopfes, was zu optimalen, für den Anwender weniger Kraft kostenden Schraubergebnissen führt.

Die Wellenpaketsteuerung läßt sich vorteilhaft bei kraftaufwendigen Schraubarbeiten anwenden, vor allem bei schwer zu lösenden oder schwer einzudrehenden Schrauben, da durch die variabel bis hin zum Motorstillstand einstellbare Wellenpaketsteuerung jeweils beim Wiederhochlaufen der Drehzahl das maximale Drehmoment des Motors am Schraubwerkzeug anliegt.

Vorteilhafte Ausgestaltungsmerkmale der Erfindung ergeben sich aus den Unteransprüchen.

### KURZBESCHREIBUNG DER ZEICHNUNGSABBILDUNG

Die Erfindung wird nachfolgend anhand der Zeichnung an Ausführungsbeispielen noch näher erläutert. Dabei zeigen:

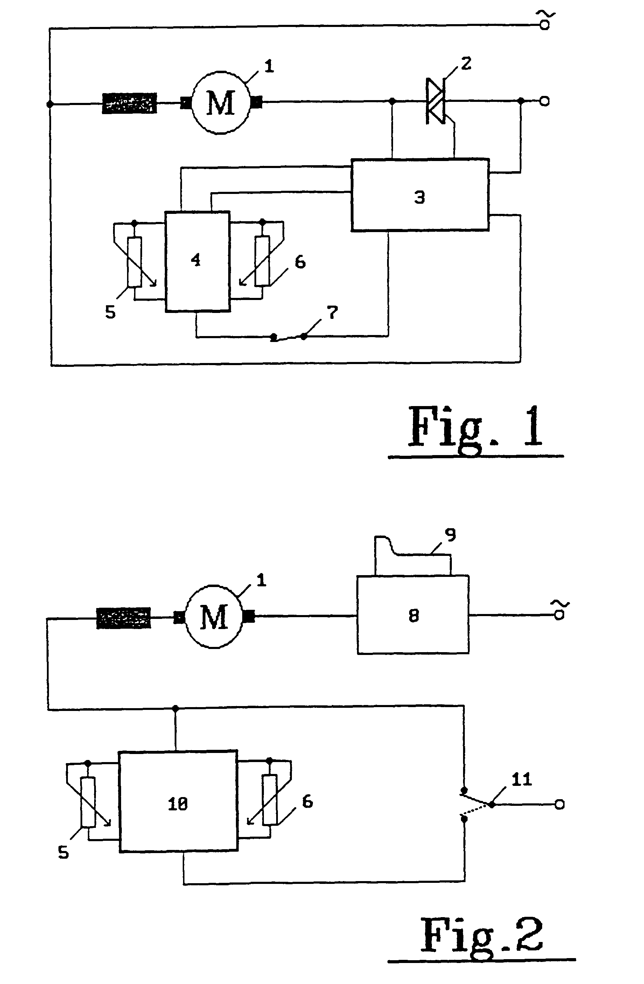

- Fig. 1-3: Schaltungsanordnungen für wellenpaketgesteuerte Phasenanschnittsteuerungen zum Betrieb des Antriebsmotors eines Elektro-Schraubwerkzeugs.

### BESTER WEG ZUR AUSFÜHRUNG DER ERFINDUNG

Elektro-Schraubwerkzeuge sind üblicherweise mit einer Elektronik zur Drehzahlsteuerung ausgestattet, nämlich einer Phasenanschnittsteuerung. Dieser Phasenanschnittsteuerung kann für bestimmte Schraubarbeiten eine Wellenpaketsteuerung überlagert werden, entsprechend ist die Phasenanschnittsteuerung umschaltbar auf eine wellenpaketgesteuerte Phasenanschnittsteuerung.

Im einzelnen zeigt Fig. 1 einen Stromwendermotor 1 eines Elektro-Schraubwerkzeugs, bei dem es sich vornehmlich um einen Universalmotor handelt. In Reihe mit dem Motor 1 liegt ein Triac 2, dem eine Phasenanschnittsteuerung 3 zugeordnet ist. Die Phasenanschnittsteuerung 3 beinhaltet eine integrierte Schaltung, bestehend aus einem IC als Zündgerät für den Triac 2, welches einen Freigabeanschluß für den Ausgang der Zündimpulse besitzt. Dem Phasenanschnitt IC ist ein Oszillator 4 zugeordnet, dessen Ausgang zum Freigabeanschluß des Phasenanschnitt IC's führt. Dem Oszillator 4 sind zwei Stellglieder 5 und 6 zugeordnet, mit dem einen Stellglied 5 wird die Ansteuerfrequenz der Freigabeeinrichtung des IC's bestimmt und mit dem anderen Stellglied 6 kann die Pulsweite der Frequenz vorgegeben werden. Die Frequenz des Oszillators 4 ist vorteilhaft auf 5 bis 50 Hz einstellbar, wobei die Pulsweite der Frequenz von 1 % bis 99 % variiert werden kann.

In der Verbindung vom Oszillatorausgang zum Freigabeanschluß des Phasenanschnitt IC's befindet sich ein Schaltglied 7 zur Bestimmung der Betriebsart der Phasenanschnittsteuerung. Die geschlossene Schaltstellung des Schaltgliedes 7 entspricht der wellenpaketgesteuerten Phasenanschnittsteuerung für den Motor 1, wird das Schaltglied 7 geöffnet, wird der Motor 1 mit der üblichen Phasenanschnittsteuerung betrieben.

Die Wirkung der wellenpaketgesteuerten Phasenanschnittsteuerung ist die, daß bei einer Frequenz des Oszillators unter 50 Hz nicht alle Halbwellen des Netzes durchgesteuert werden. Je weiter die Frequenz unter 50 Hz liegt, umso weniger Halbwellen werden durchgesteuert. Die Anzahl der nacheinander durchgesteuerten und nacheinander nicht durchgesteuerten Halbwellen richtet sich nach der Pulsweite der Frequenz.

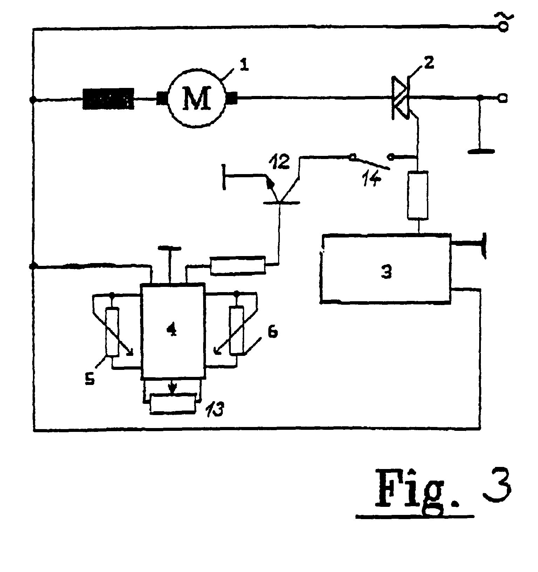

Fig. 2 zeigt eine Schaltungsanordnung, bei der die Wellenpaketsteuerung von der Phasenanschnittsteuerung getrennt aufgebaut und separat der Phasenanschnittsteuerung zugeordnet ist.

Üblicherweise ist bei Elektroschraubwerkzeugen die Schaltungsanordnung zur Phasenanschnittsteuerung in einem Netzschalter 8 komplett angeordnet, so kann mit dem Bedienungselement 9 des Netzschalters 8 das Netz geschaltet und die Drehzahl des Motors 1 stufenlos bestimmt werden.

Die Wellenpaketsteuerung 10 beinhaltet hier selbst einen Triac. Mit einem in der direkt zum Motor führenden Anschlußleitung des Netzes angeordneten Umschaltglied 11 kann hier zwischen der wellenpaketgesteuerten Phasenanschnittsteuerung und der standardgemäßen Phasenanschnittsteuerung gewählt werden. Die Funktions- und Wirkungsweise der wellenpaketgesteuerten Phasenanschnittsteuerung ist die gleiche, wie sie anhand von Fig. 1 beschrieben wurde.

Fig. 3 zeigt eine Schaltungsanordnung, welche die Verschaltung der Phasenanschnittsteuerung 3 umgeht, indem hier die Triggerimpulse zur Ansteuerung des Triac 2 über ein Schaltglied 12 abgeleitet oder freigegeben werden. Über ein Potentiometer 13 und/oder einen Schalter 14 kann die Wellenpaketsteuerung 4 stufenlos verstellt und/oder ein- und ausgeschaltet werden.

Generell kann die Funktion der Phasenanschnittsteuerung und/oder des Oszillators 4 sowohl analog als auch digital in Form eines Mikroprozessors ausgeführt werden.

## Patentansprüche

1. Elektro-Schraubwerkzeug mit einem Universalmotor (1), der mittels einer Phasenanschnittsteuerung (3) zur Bestimmung variabler Drehzahlen betrieben ist,
dadurch gekennzeichnet,
daß die Phasenanschnittsteuerung (3) auf eine wellenpaketgesteuerte Phasenanschnittsteuerung umschaltbar ist und der Universalmotor (1) im Betrieb mit der Wellenpaketsteuerung auf eine rukkende Drehzahl bis hin zum Stillstand einstellbar ist.

2. Elektro-Schraubwerkzeug nach Anspruch 1,
dadurch gekennzeichnet,
daß die Phasenanschnittsteuerung (3) einen Triac (2) mit einem IC als Zündgerät aufweist und dem IC ein Oszillator (4) zugeordnet ist, dessen Ausgang zum Freigabeanschluß des Phasenanschnitt IC's führt oder den Triggerimpuls zur Ansteuerung des Triac (2) beeinflußt.

3. Elektro-Schraubwerkzeug nach Anspruch 2,
dadurch gekennzeichnet,
daß dem Oszillator (4) zwei Stellglieder (5, 6) zugeordnet sind, von denen das eine Stellglied (5) zur Bestimmung der Ansteuerfrequenz der Freigabeeinrichtung des Phasenanschnitt IC's und das andere Stellglied (6) zur Bestimmung der Pulsweite der Frequenz vorgesehen ist.

4. Elektro-Schraubwerkzeug nach Anspruch 2 oder 3,
dadurch gekennzeichnet,
daß die Frequenz des Oszillators (4) auf 5 bis 50 Hz und die Pulsweite der Frequenz zwischen 10 und 80 % einstellbar ist.

5. Elektrowerkzeug nach einem der Ansprüche 2 - 4,
dadurch gekennzeichnet,
daß in die Verbindung zwischen dem Ausgang des Oszillators (4) und dem Freigabeanschluß des Phasenanschnitt IC's ein Schaltglied (7) zur Bestimmung der Betriebsart der Phasenanschnittsteuerung eingefügt ist.

6. Elektrowerkzeug nach einem der Ansprüche 1 - 5,
dadurch gekennzeichnet,
daß die Schaltungsanordnung der Phasenanschnittsteuerung durch den Oszillator(4)entweder am Gate des Triac (2) oder am Sollwert des Phasenanschnitt IC's beeinflußt wird.

7. Elektrowerkzeug nach einem der Ansprüche 1 - 6,
dadurch gekennzeichnet,
daß die Wellenpaketsteuerung getrennt von der Phasenanschnittsteuerung aufgebaut und der Phasenanschnittsteuerung separat zugeordnet ist.

8. Elektrowerkzeug nach Anspruch 7,
dadurch gekennzeichnet,
daß die Wellenpaketsteuerung (10) einen Triac beinhaltet.

9. Elektrowerkzeug nach Anspruch 7 oder 8,
dadurch gekennzeichnet,
daß in der direkt zum Motor führenden Anschlußleitung des Netzes ein Umschaltglied (11) zum Wählen zwischen der wellenpaketgesteuerten Phasenanschnittsteuerung und der bloßen Phasenanschnittsteuerung angeordnet ist.

10. Elektrowerkzeug nach einem der Ansprüche 1 - 9,
dadurch gekennzeichnet,
daß die Phasenanschnittsteuerung und/oder die wellenpaketgesteuerte Phasenanschnittsteuerung analog und/oder digital ausgeführt sind.

## Claims

1. Electric screw driving tool with a universal motor (1) which is operated by means of a phase section control (3) for determining variable speeds, characterised in that the phase section control (3) can be switched over to a waveparcel-controlled phase section control and the universal motor (1) can be set during operation with the wave parcel control to a moving speed up to stationary.

2. Electric screw driving tool according to claim 1 characterised in that the phase section control (3) has a triac (2) with an IC as ignition device and an oscillator (4) is associated with the IC whose output leads to the release connection of the phase section IC or influences the trigger impulse for controlling the triac (2).

3. Electric screw driving tool according to claim 2 characterised in that two setting members (5,6) are associated with the oscillator (4) of which one setting member (5) is provided for determining the control frequency of the release device of the phase section IC and the other setting member (6) is provided for determining the pulse width of the frequency.

4. Electric screw driving tool according to claim 2 or 3 characterised in that the frequency of the oscillator (4) is can be set to 5 to 50 Hz and the pulse width of the frequency can be set between 10 and 80 %.

5. Electric tool according to one of claims 2 to 4 characterised in that a switch member (7) for determining the operating mode of the phase section control is inserted in the connection between the output of the oscillator (4) and the release connection of the phase section IC.

6. Electric tool according to one of claims 1 to 5 characterised in that the circuit arrangement of the phase section control is influenced by the oscillator (4) either at the gate of the triac (2) or at the ideal value of the phase section IC.

7. Electric tool according to one of claims 1 to 6 characterised in that the wave parcel control is built up separately from the phase section control and is associated with the phase section control separately.

8. Electric tool according to claim 7 characterised in that the wave parcel control (10) contains a triac.

9. Electric tool according to claim 7 or 8 characterised in that a switch-over member (11) is mounted in the connection line of the network leading directly to the motor for selection between the phase section control controlled by the wave parcel and the mere phase section control itself.

10. Electric tool according to one of claims 1 to 9 characterised in that the phase section control and/or the phase section control controlled by the wave parcel is/are designed analogue and/or digital.

## Revendications

1. Outil de vissage électrique avec un moteur universel (1) actionné à l'aide d'une commande par coupe (3) pour la détermination de vitesses de rotation variables,
caractérisé en ce que
la commande par coupe (3) peut être commutée en une commande par coupe à paquet d'ondes et que le moteur universel (1) conduit par la commande à paquet d'ondes peut être réglé à une vitesse de rotation par glissement tour à tour jusqu'à l'arrêt.

2. Outil de vissage électrique selon la revendication 1,
caractérisé en ce que
la commande par coupe (3) présente un triac (2) avec un IC comme amorceur et qu'un oscillateur (4) est adjoint à l'IC, la sortie de cet oscillateur (4) conduisant au raccord de libération de l'IC de coupe ou influençant l'impulsion de déclenchement du triac (2).

3. Outil de vissage électrique selon la revendication 2,
caractérisé en ce que
deux organes de réglage (5, 6) sont adjoints à l'oscillateur (4), l'un d'eux (5) étant prévu aux fins de détermination de la fréquence d'excitation du dispositif de libération de l'IC tandis que l'autre organe de réglage (6) sert à déterminer la l'impulsion en largeur de la fréquence.

4. Outil de vissage électrique selon la revendication 2 ou 3,
caractérisé en ce que
la fréquence de l'oscillateur (4) peut être réglée de 5 à 50 HZ et que l'impulsion en largeur de la fréquence est réglable entre 10 et 80 %.

5. Outil électrique selon l'une des revendications 2 à 4,
caractérisé en ce que,
pour la détermination du genre de service de la commande par coupe, un organe de commutation (7) est incorporé dans le raccord entre la sortie de l'oscillateur (4) et le branchement de libération de l'IC de coupe.

6. Outil électrique selon l'une des revendications 1 à 5,
caractérisé en ce que
le circuit de commutation de la commande par coupe est influencé par l'oscillateur (4) soit au niveau de la gâchette du triac (2) soit au niveau de la valeur de consigne de l'IC de coupe.

7. Outil électrique selon l'une des revendications 1 à 6,
caractérisé en ce que
la commande à paquet d'ondes est construite séparée de la commande par coupe et est adjointe séparément à la commande par coupe.

8. Outil électrique selon la revendication 7,
caractérisé en ce que
la commande à paquet d'ondes (10) comprend un triac.

9. Outil électrique selon la revendication 7 ou 8,
caractérisé en ce que,
pour le choix entre la commande par coupe à paquet d'ondes et la simple commande par coupe, un organe de commutation (11) est disposé dans la conduite d'alimentation sur secteur conduisant directement au moteur.

10. Outil électrique selon l'une des revendications 1 à 9,
caractérisé en ce que
la commande par coupe et/ou la commande par coupe à paquet d'ondes sont de construction analogique et/ou numérique.
